# EUROPÄISCHE PATENTSCHRIFT

(11) **EP 4 233 784 B1**
(45) Veröffentlichungstag und Bekanntmachung des Hinweises auf die Patenterteilung: **04.12.2024**
(21) Anmeldenummer: 23186096.6
(22) Anmeldetag: 14.10.2021
(51) Int. Cl.: C03C 23/00, A61C 13/00

(54) **BELICHTUNGSGERÄT ZUM BELEUCHTEN EINES DENTALOBJEKTS**
EXPOSURE APPARATUS FOR ILLUMINATING A DENTAL OBJECT
APPAREIL D'EXPOSITION POUR ILLUMINER UN OBJET DENTAIRE

(43) Veröffentlichungstag der Anmeldung: 30.08.2023
(62) Teilanmeldung aus: 21202635.5
(73) Patentinhaber: Ivoclar Vivadent AG, 9494 Schaan (LI)
(72) Erfinder: Niedrig, Chrisitan, 9478 Azmoss (CH); Ritzberger, Christian, 9472 Grabs (CH); Dittmer, Marc, 6800 Feldkirch (AT); Rampf, Markus, 7212 Seewis Dorf (CH)
(74) Vertreter: Baldus, Oliver

(56) Entgegenhaltungen:
- WO-A1-2021/048733
- JP-U- 3 203 603

## Beschreibung

Die vorliegende Erfindung betrifft ein Belichtungsgerät zum Beleuchten eines Dentalobjekts und ein Verfahren zum Beleuchten eines Dentalobjekts.

Polychrome Gläser und Glaskeramiken können durch eine Belichtung zusammen mit einer thermischen Behandlung eingefärbt werden, wie beispielsweise ein Quarzglas, eine Quarz-Glaskeramik, ein Lithiumalumosilikatglas, eine Lithiumaluminosilikat-Glaskeramik, ein Lithiumsilikatglas oder eine Lithiumsilikat-Glaskeramik. Die Belichtung erfolgt hierbei üblicherweise mittels UV-Strahlung. Zum Beispiel werden Verfahren zur Belichtung von Dentalobjekten in der JP 3 203603 U oder WO 2021/048733 offenbart. Die unterschiedliche Farbwirkung wird nach erfolgter Belichtung hauptsächlich über eine Temperaturbehandlung hergestellt.

Die polychromen Gläser und Glaskeramiken umfassen hierzu beispielsweise eine oxidierbare Komponente und eine reduzierbare Färbekomponente. Die oxidierbare Komponente ist eine Komponente, die durch Bestrahlung oxidiert werden bzw. zur Elektronenabgabe angeregt werden kann. Oxidierbare Komponenten sind beispielsweise Cer-Ionen, Europium-Ionen, Erbium-Ionen, Kupfer-Ionen und deren Mischungen. Die reduzierbare Färbekomponente ist beispielsweise eine Komponente, die unter Ausbildung einer Farbänderung reduziert werden kann. Bevorzugte reduzierbare Färbekomponenten sind Kationen von Metallen, wie beispielsweise von Silber, Gold, Kupfer oder deren Kombinationen.

Es ist die technische Aufgabe der vorliegenden Erfindung, eine anwendungssichere Farbgebung eines Dentalobjekts mittels kurzwelliger Strahlung zu ermöglichen.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Belichtungsgerät gemäß Anspruch 1 gelöst.

Die emittierte Strahlung dient zum Belichten des Dentalobjekts. Dadurch wird der technische Vorteil erreicht, dass das Dentalobjekt in einem geschlossenen Bereich belichtet werden kann und ein Austreten von Strahlung verhindert wird.

In einer technisch vorteilhaften Ausführungsform des Belichtungsgeräts ist die Strahlungsquelle ausgebildet, Strahlung mit einer Wellenlänge zwischen 350 nm und 5 pm, vorzugsweise zwischen 350 nm und 10 nm, oder höchst vorzugsweise zwischen 350 nm und 100 nm zu emittieren. Dadurch wird beispielsweise der technische Vorteil erreicht, dass besonders geeignete Wellenlängenbereiche für eine Behandlung des Dentalobjektes verwendet werden können.

In einer weiteren technisch vorteilhaften Ausführungsform des Belichtungsgeräts umfasst das Belichtungsgerät eine Intensitätseinstellungseinrichtung zum Einstellen einer Strahlungsintensität der Strahlungsquelle. Dadurch wird beispielsweise der technische Vorteil erreicht, dass die Intensität der Strahlungsquelle auf einen gewünschten Wert eingestellt und verändert werden kann.

In einer weiteren technisch vorteilhaften Ausführungsform des Belichtungsgeräts umfasst das Belichtungsgerät eine Zeitschaltvorrichtung zum Aktivieren der Strahlungsquelle für einen vorgegebenen Zeitraum. Dadurch wird beispielsweise der technische Vorteil erreicht, dass die Belichtung automatisch für eine vorgegebene Zeitdauer durchgeführt werden kann.

In einer weiteren technisch vorteilhaften Ausführungsform des Belichtungsgeräts umfasst das Belichtungsgerät eine einzige Strahlungsquelle zum Emittieren von Strahlung mit einer Wellenlänge, die kleiner als 350 nm ist. Dadurch wird beispielsweise der technische Vorteil erreicht, dass sich der technische Aufwand für die Herstellung des Belichtungsgeräts verringert.

In einer weiteren technisch vorteilhaften Ausführungsform des Belichtungsgeräts umfasst das Belichtungsgerät eine Bewegungsvorrichtung zum Bewegen des Dentalobjekts vor der Strahlungsquelle. Dadurch wird beispielsweise der technische Vorteil erreicht, dass die Strahlung auf unterschiedliche Bereiche des Dentalobjekt gerichtet werden kann.

In einer weiteren technisch vorteilhaften Ausführungsform des Belichtungsgeräts ist die Bewegungsvorrichtung ausgebildet, das Dentalobjekt in einer Höhe zu verfahren und/oder gegenüber der Strahlungsquelle zu drehen. Dadurch wird beispielsweise der technische Vorteil erreicht, dass das Dentalobjekt auf einfache Weise von unterschiedlichen Seiten belichtet werden kann.

In der Ausführungsform des Belichtungsgeräts ist das Belichtungsgerät ausgebildet, die Strahlungsquelle in einer Höhe zu verfahren. Dadurch wird beispielsweise der technische Vorteil erreicht, dass das Dentalobjekt auf einfache Weise von unterschiedlicher Position aus belichtet werden kann.

In einer weiteren technisch vorteilhaften Ausführungsform des Belichtungsgeräts umfasst das Belichtungsgerät eine Infrarot-Strahlungsquelle zum Emittieren von Strahlung mit einer Wellenlänge in die Kammer, die größer als 700 nm ist. Die Infrarot-Strahlungsquelle kann innerhalb oder außerhalb der Kammer angeordnet sein. Eine Strahlungsführung in die Kammer kann mittels einer Lichtleitfaser erfolgen. Die Infrarot-Strahlungsquelle, wie beispielsweise ein IR-Laser, kann auch außerhalb der Kammer angeordnet sein. Die emittierte Strahlung kann dann mittels eines Scanners (z.B. DMD - Digital Mirror Device) durch ein geeignetes Sichtfenster über das im Inneren der Kammer angeordnete Dentalobjekt gerastert werden. Dadurch wird beispielsweise der technische Vorteil erreicht, dass das Dentalobjekt erwärmt und eine Farbgebung des Dentalobjekts abgeschlossen werden kann.

In einer weiteren technisch vorteilhaften Ausführungsform des Belichtungsgeräts ist die Infrarot-Strahlungsquelle ausgebildet, Strahlung mit einer Wellenlänge zwischen 700 nm und 10 um, vorzugsweise zwischen 700 nm und 5 um, oder höchst vorzugsweise zwischen 700 nm und 3 um zu emittieren. Dadurch wird beispielsweise der technische Vorteil erreicht, dass besonders geeignete Wellenlängen verwendet werden, um das Dentalobjekt zu erwärmen.

Gemäß einem zweiten Aspekt wird die technische Aufgabe durch ein Verfahren zum Beleuchten eines Dentalobjekts gemäß Anspruch 11 gelöst.

Durch das Verfahren werden die gleichen technischen Vorteile wie durch das Belichtungsgerät nach dem ersten Aspekt erreicht.

In einer technisch vorteilhaften Ausführungsform des Verfahrens wird das Dentalobjekt während dem Emittieren von Strahlung bewegt. Dadurch wird beispielsweise der technische Vorteil erreicht, dass die Strahlung auf unterschiedliche Bereiche des Dentalobjekt gerichtet werden kann.

In einer weiteren technisch vorteilhaften Ausführungsform des Verfahrens wird die Strahlungsquelle während dem Emittieren von Strahlung bewegt. Dadurch wird beispielsweise ebenfalls der technische Vorteil erreicht, dass die Strahlung auf unterschiedliche Bereiche des Dentalobjekt gerichtet werden kann.

In einer weiteren technisch vorteilhaften Ausführungsform des Verfahrens wird Strahlung mit einer Wellenlänge, die größer als 700 nm ist, mittels einer Infrarot-Strahlungsquelle in die Kammer emittiert wird. Dadurch wird beispielsweise ebenfalls der technische Vorteil erreicht, dass das Dentalobjekt erwärmt und eine Farbgebung des Dentalobjekts abgeschlossen werden kann.

In einer weiteren technisch vorteilhaften Ausführungsform des Verfahrens wird die Infrarot-Strahlungsquelle während dem Emittieren von Strahlung bewegt. Dadurch wird beispielsweise ebenfalls der technische Vorteil erreicht, dass die Wärmestrahlung auf unterschiedliche Bereiche des Dentalobjekts gerichtet werden kann.

Ausführungsbeispiele der Erfindung sind in den Zeichnungen dargestellt und werden im Folgenden näher beschrieben.

Es zeigen:
- Fig. 1: eine schematische Darstellung eines Belichtungsgeräts; und
- Fig. 2: ein Blockdiagramm eines Verfahrens zum Beleuchten eines Dentalobjekts.

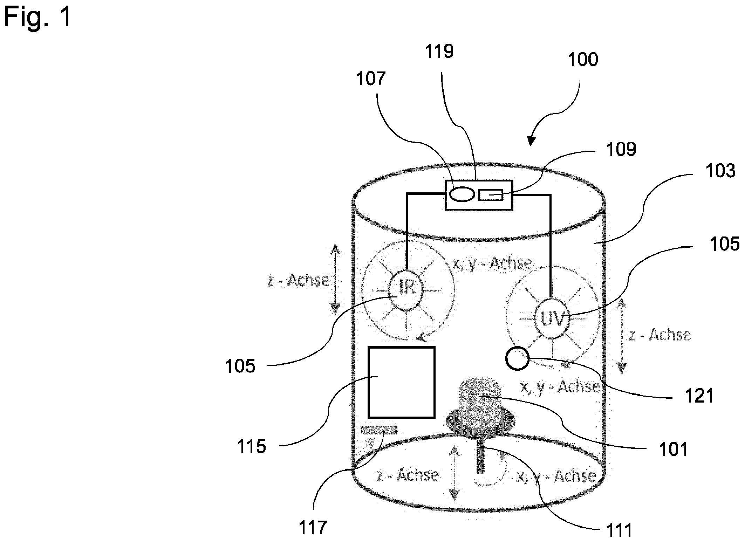

Fig. 1 zeigt eine schematische Darstellung eines Belichtungsgeräts 100. Das Belichtungsgerät 100 dient zum Belichten eines Dentalobjekts 101, das aus einem polychromen Glas und oder einer polychromen Glaskeramik hergestellt ist. Das Dentalobjekt 101 ist eine dentale Restauration, wie beispielsweise eine Krone, eine Brücke, ein Veneer, ein Abutment, ein Inlay oder ein Onlay.

Das Belichtungsgerät 100 umfasst eine Kammer 103, in der das Dentalobjekt 101 angeordnet wird und die das Dentalobjekt 101 umgibt. Das Belichtungsgerät 100 kann einen UV-transparenten Halter umfassen, auf den ein Dentalobjekt 101 mit einer Aushöhlung gesetzt werden kann und der eine Beleuchtung des Dentalobjekts 101 auf der Innenseite ermöglicht. Die Kammer 103 kann eine Tür 115 umfassen, die geöffnet wird, um das Dentalobjekt 101 in das Innere einzulegen. Zum Belichten des Dentalobjekts 101 wird die Tür 115 geschlossen, so dass kein Licht aus der Kammer 103 nach außen treten kann.

Die Belichtungseinrichtung 100 umfasst eine Strahlungsquelle 105 zum Emittieren von Strahlung mit einer Wellenlänge, die kleiner als 350 nm ist, in die Kammer 103. Die emittierte Strahlung von der Strahlungsquelle 105 trifft auf das Dentalobjekt 101. Durch die Strahlung werden in dem Dentalobjekt 101 elektronische Übergänge angeregt, die bei einer anschließenden Erwärmung des Dentalobjekts 101 zu einer Farbänderung führen.

Das Belichtungsgerät 100 kann einen elektrischen Schalter umfassen, der beim Öffnen der Tür 115 betätigt wird und durch den die Strahlungsquelle 105 deaktiviert wird. Dadurch wird der technische Vorteil erreicht, dass das Austreten gefährlicher Strahlung aus der Kammer 103 verhindert wird. Die Strahlungsquelle 105 ist beispielsweise in einer Wand der Kammer 103 angeordnet, so dass diese in den Innenraum strahlen kann. Vor der Strahlungsquelle 105 kann eine Blende 121 angeordnet sein, die die seitlichen Bereiche der Strahlung abschirmt, wie beispielsweise eine Lochblende. Dadurch kann die emittierte Strahlung auf bestimmte Bereiche des Dentalobjektes 101 gerichtet werden. Das Belichtungsgerät 100 kann aber auch einen Lichtleiter umfassen, mit dem die Strahlung von der Strahlungsquelle 105 an das Dentalobjekt 101 herangeführt wird, wie beispielsweise eine Quarzglasfaser.

Die Strahlungsquelle 105 wird elektrisch betrieben und ist beispielsweise durch eine Quecksilberdampflampe, eine Quarzlampe, eine Schwarzlichtlampe, ein UV-Laser oder eine UV-Leuchtdiode gebildet. Die Strahlungsquelle 105 kann aber auch eine Röntgenröhre zur Erzeugung von Röntgenstrahlen umfassen. In diesem Fall kann die Strahlungsquelle 105 Strahlung mit einer Wellenlänge von 5 pm bis 10 nm emittieren.

Die Strahlungsquelle 105 ist geeignet, Strahlung mit einer Wellenlänge zwischen 350 nm und 5 pm, vorzugsweise zwischen 350 nm und 10 nm, oder höchst vorzugsweise zwischen 350 nm und 100 nm zu emittieren. Neben der Verwendung von UV-Strahlung ist es aber auch möglich, das Dentalobjekt 101 mit energiereicher Strahlung zu belichten. Beispielsweise mit Röntgenstrahlung mit einer Wellenlänge von 5 pm bis 10 nm.

Um die Intensität der Strahlungsquelle 105 einzustellen, umfasst das Belichtungsgerät 100 eine Intensitätseinstellungseinrichtung 107. Die Intensitätseinstellungseinrichtung 107 kann durch einen Regler gebildet sein, mit dem die Leistung der Strahlungsquelle 105 geregelt werden kann. Mit dieser Intensitätseinstellungseinrichtung 107 kann beispielsweise der Strom oder die Spannung eingestellt werden, mit der die Strahlungsquelle 105 betrieben wird.

Die Intensitätseinstellungseinrichtung 107 kann allerdings auch digital implementiert sein. In diesem Fall umfasst die Belichtungseinrichtung 100 eine Datenschnittstelle 117, über die von einem externen Gerät Daten für eine Steuerung der Intensität der Strahlungsquelle 105 übertragen werden können, wie beispielsweise eine WLAN-Schnittstelle oder eine Bluetooth-Schnittstelle.

Beispielsweise kann ein Mobiltelefon oder ein Tablet mit einer geeigneten Applikation ausgerüstet werden, mit der sich die Intensität der Strahlungsquelle 105 steuern lässt. Zu diesem Zweck umfasst das Belichtungsgerät 100 eine elektronische Steuereinrichtung 119, die mit der Applikation kommuniziert und die die ausgesandte Intensität der Strahlungsquelle 105 erhöhen oder verringern kann. Die elektronische Steuereinrichtung 119 kann einen Mikroprozessor und einen digitalen Speicher umfassen, in dem Daten und Programme für die Steuerung der Funktionen des Belichtungsgerätes 100 abgelegt sind.

Zudem kann die elektronische Steuereinrichtung 119 eine Zeitschaltvorrichtung 109 umfassen, die die Strahlungsquelle 105 für einen vorgegebenen Zeitraum aktiviert und nach Ablauf des vorgegebenen Zeitraums automatisch deaktiviert. Dadurch wird der technische Vorteil erreicht, dass das Dentalobjekt 101 automatisch für eine bestimmte Belichtungsdauer belichtet werden kann und eine definierte Belichtung des Dentalobjekts 101 erfolgt.

Die Steuereinrichtung 119 kann zudem einen angelernten Algorithmus zum Steuern der Strahlungsquelle 105 und/oder der Infrarot-Strahlungsquelle 113 umfassen. Der Algorithmus kann ein Machine-Learning-Algorithmus sein oder ein künstliches neuronales Netz umfassen. Der Algorithmus wird anhand von Trainingsdaten angelernt.

Dadurch wird beispielsweise der technische Vorteil erreicht, dass eine effiziente Technologie verwendet wird, um auf Basis von experimentellen Daten automatisch ein spezifisches Belichtungs- und/oder Temperatur-Programm zu generieren und einen gewünschten Farbton zu erzielen. Die experimentellen Daten dienen als Trainingsdaten zur Ermittlung des Farbtons. Wird dem Machine-Learning-Algorithmus ein Soll-Farbton als Eingabe übergeben, kann dieser ein geeignetes Belichtungs-Temperatur-Programm zum Steuern der Strahlungsquelle 105 und/oder der Infrarot-Strahlungsquelle 113 ermitteln. Auf diese Weise kann das Belichtungs-Temperatur-Programm mithilfe des Machine-Learning-Algorithmus automatisch generiert werden. Das Belichtungs-Temperatur-Programm kann im Hintergrund mittels der Machine-Learning-Technologie generiert und der Steuereinrichtung 119 übergeben werden.

Die Steuereinrichtung 119 kann auch eine elektronische Nachschlagetabelle (Lookup Table) umfassen, in der zu vorgegebenen Farbtönen des Dentalobjekts 101, die jeweiligen Steuerdaten für die Strahlungsquelle 105 und die Infrarot-Strahlungsquelle 113 gespeichert sind. Auf diese Weise lässt sich das Dentalobjekt 101 mit dem gewünschten Farbton automatisch erzeugen.

Das Belichtungsgerät 100 kann eine einzige oder mehrere Strahlungsquellen 105 zum Emittieren von Strahlung mit einer Wellenlänge umfassen, die kleiner als 350 nm ist. Durch eine einzige Strahlungsquelle 105 wird der technische Aufwand zum Herstellen der Belichtungseinrichtung 100 verringert. Beim Einsatz einer einzigen Strahlungsquelle 105 ist es vorteilhaft das Dentalobjekt 101 in verschiedenen räumlichen Richtungen zu bewegen, so dass die Strahlung auf alle Bereiche des Dentalobjektes 101 treffen kann.

Zu diesem Zweck umfasst das Belichtungsgerät 100 eine Bewegungsvorrichtung 111 zum Bewegen des Dentalobjekts 101 vor der Strahlungsquelle 105. Die Bewegungsvorrichtung 111 ist ausgebildet, das Dentalobjekt 101 in einer Höhe zu verfahren und/oder gegenüber der Strahlungsquelle 105 zu drehen. Die Drehachse ist beispielsweise eine vertikale Achse (z-Achse). Entlang der Drehachse kann das Dentalobjekt 101 zusätzlich linear verfahren werden. Die Bewegungsvorrichtung kann aber auch durch einen mechanischen Arm gebildet werden, mit dem das Dentalobjekt 101 im inneren der Kammer 102 bewegt werden kann, wie beispielsweise einen Roboterarm. Mit diesem Arm kann das Dentalobjekt 101 steuerbar vor der Strahlungsquelle 105 bewegt werden.

Die Bewegungsvorrichtung 111 ist beispielsweise durch einen Drehteller gebildet, auf dem das Dentalobjekt 101 angeordnet werden kann. Der Drehteller ist vor der Strahlungsquelle 105 drehbar und in einer Höhe verstellbar. Zu diesem Zweck wird der Drehteller beispielsweise von Elektromotoren über eine passende Mechanik angetrieben. Die Bewegungsvorrichtung 111 kann ebenfalls von der elektronischen Steuereinrichtung 119 gesteuert werden. In der elektronischen Steuereinrichtung 119 kann auch ein Bewegungsprogram gespeichert sein, das die Bewegungsvorrichtung 111 steuert und dadurch das Dentalobjekt 101 in einem vorgegebenen zeitlichen Ablauf in Bezug zur Strahlungsquelle 105 bewegt. Durch das Bewegungsprogramm kann das Dentalobjekt 101 gegenüber der Strahlungsquelle 105 positioniert werden. Dabei lassen sich nacheinander unterschiedliche Positionen anfahren.

Teil der Erfindung ist es, die Strahlungsquelle 105 über eine weitere Bewegungsvorrichtung in einer Höhe zu verfahren und/oder um das Dentalobjekt 105 herumzubewegen. Auch zu diesem Zweck können Elektromotoren über eine passende Mechanik angetrieben werden. Im Allgemeinen sind das Dentalobjekt 101 und/oder die Strahlungsquelle frei beweglich. Beim Einsatz mehrerer Strahlungsquellen 105 können diese um das Dentalobjekt 101 herum angeordnet sein. Dadurch kann das Dentalobjekt 101 von mehreren Seiten beleuchtet werden. In diesem Fall kann auf eine Bewegungsvorrichtung 111 verzichtet werden.

Das Belichtungsgerät 100 kann eine weitere zusätzliche Infrarot-Strahlungsquelle 113 zur örtlichen thermischen Behandlung des Dentalobjekts 101 und der örtlichen Farbeinstellung des Dentalobjekts 101 umfassen. Die Infrarot-Strahlungsquelle 113 emittiert Strahlung mit einer Wellenlänge in die Kammer 103, die größer als 700 nm ist. Die Infrarot-Strahlungsquelle 113 kann ausgebildet sein, Strahlung mit einer Wellenlänge zwischen 700 nm und 10 um, vorzugsweise zwischen 700 nm und 5 um, oder höchst vorzugsweise zwischen 700 nm und 3 um zu emittieren.

Die Infrarot-Strahlungsquelle 113 ist beispielsweise durch eine elektrisch betriebene Infrarotlampe, Rotlichtlampe oder Wärmelampe gebildet. Die Infrarot-Strahlungsquelle 113 kann aber auch durch einen thermischen Laser oder Infrarot-Laser gebildet sein, wie beispielsweise ein Nd:YAG-Laser, ein Er:YAG-Laser, ein CO- und CO2-Laser. Falls ausreichend Energie von der Glaskeramik absorbiert wird, kann auch jede andere Wellenlänge verwendet werden, wie beispielsweise im sichtbaren oder UV-Bereich. Für die Erwärmung kommt es lediglich auf den thermischen Eintrag in das Dentalobjekt an, vorzugsweise ohne dieses aufzuschmelzen oder gar zu ablatieren. Alternativ kann die Wärmebehandlung auch mittels Mikrowellenstrahlung erfolgen.

Um die Intensität der Infrarot-Strahlungsquelle 105 einzustellen, kann das Belichtungsgerät 100 eine weitere Intensitätseinstellungseinrichtung 107 umfassen. Ebenfalls kann die elektronische Steuereinrichtung 119 eine Zeitschaltvorrichtung 109 umfassen, die die Infrarot-Strahlungsquelle 113 für einen vorgegebenen Zeitraum aktiviert und nach Ablauf des vorgegebenen Zeitraums automatisch deaktiviert. Auch die Infrarot-Strahlungsquelle 113 kann beweglich angeordnet sein, so dass diese in einer Höhe verändert werden kann und um das Dentalobjekt 101 herumbewegt werden kann. Vor der Infrarot-Strahlungsquelle 113 kann ebenfalls eine Blende 121 angeordnet sein, die die seitlichen Bereiche der Strahlung abschirmt, wie beispielsweise eine Lochblende.

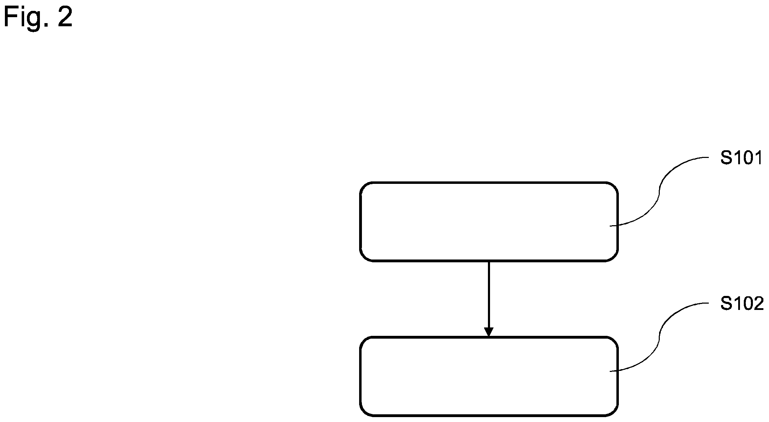

Fig. 2 zeigt ein Blockdiagramm eines Verfahrens zum Beleuchten eines Dentalobjekts 101. Das Verfahren umfasst den Schritt S101 eines Aufnehmens des Dentalobjekts 101 in der Kammer 103 des Belichtungsgerätes 100. Im Schritt S102 wird Strahlung mit einer Wellenlänge, die kleiner als 350 nm ist, in der Kammer 103 emittiert. Diese Strahlung trifft auf das Dentalobjekt 101. Bereiche des Dentalobjekts 101, die der Strahlung ausgesetzt werden, nehmen nach einem Erhitzen des Dentalobjekts 101 eine Farbe an, die von der vorherigen Belichtung abhängt.

Durch dieses Verfahren wird der technische Vorteil erreicht, dass das Dentalobjekt 101 sicher zur Farbgebung belichtet werden kann und ein Austreten von Strahlung verhindert werden kann. Ein Dentalobjekt 101 mit einer Aushöhlung kann auf einem UV-transparenten Halter angeordnet sein, der eine Beleuchtung des Dentalobjekts 101 auf der Innenseite ermöglicht.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Belichtungsgerät
- 101: Dentalobjekt
- 103: Kammer
- 105: Strahlungsquelle
- 107: Intensitätseinstellungseinrichtung
- 109: Zeitschaltvorrichtung
- 111: Bewegungsvorrichtung
- 113: Infrarot-Strahlungsquelle
- 115: Tür
- 117: Datenschnittstelle
- 119: elektronische Steuereinrichtung
- 121: Blende

## Patentansprüche

1. Belichtungsgerät (100) zum Beleuchten eines Dentalobjekts (101), mit:
- einer Kammer (103) zur Aufnahme des Dentalobjekts (101) ;
- einer Strahlungsquelle (105) zum Emittieren von Strahlung mit einer Wellenlänge, die kleiner als 350 nm ist, in die Kammer (103); und
- einer Bewegungsvorrichtung, die ausgebildet ist, die Strahlungsquelle (105) in einer Höhe zu verfahren und/oder um das Dentalobjekt (101) herumzubewegen.

2. Belichtungsgerät (100) nach Anspruch 1, wobei die Strahlungsquelle (105) ausgebildet ist, Strahlung mit einer Wellenlänge zwischen 350 nm und 5 pm, vorzugsweise zwischen 350 nm und 10 nm, oder höchst vorzugsweise zwischen 350 nm und 100 nm zu emittieren.

3. Belichtungsgerät (100) nach einem der vorangehenden Ansprüche, wobei das Belichtungsgerät (100) eine Intensitätseinstellungseinrichtung (107) zum Einstellen einer Strahlungsintensität der Strahlungsquelle (105) umfasst.

4. Belichtungsgerät (100) nach einem der vorangehenden Ansprüche, wobei das Belichtungsgerät (100) eine Zeitschaltvorrichtung (109) zum Aktivieren der Strahlungsquelle (105) für einen vorgegebenen Zeitraum umfasst.

5. Belichtungsgerät (100) nach einem der vorangehenden Ansprüche, wobei das Belichtungsgerät (100) eine einzige Strahlungsquelle (105) zum Emittieren von Strahlung mit einer Wellenlänge umfasst, die kleiner als 350 nm ist.

6. Belichtungsgerät (100) nach einem der vorangehenden Ansprüche, wobei das Belichtungsgerät (100) eine Bewegungsvorrichtung (111) zum Bewegen des Dentalobjekts (101) vor der Strahlungsquelle (105) umfasst.

7. Belichtungsgerät (100) nach Anspruch 6, wobei die Bewegungsvorrichtung (111) ausgebildet ist, das Dentalobjekt (101) in einer Höhe zu verfahren und/oder gegenüber der Strahlungsquelle (105) zu drehen.

8. Belichtungsgerät (100) nach einem der vorangehenden Ansprüche, wobei das Belichtungsgerät (100) ausgebildet ist, die Strahlungsquelle (105) in einer Höhe zu verfahren.

9. Belichtungsgerät (100) nach einem der vorangehenden Ansprüche, wobei das Belichtungsgerät (100) eine Infrarot-Strahlungsquelle (113) zum Emittieren von Strahlung mit einer Wellenlänge in der Kammer (103) umfasst, die größer als 700 nm ist.

10. Belichtungsgerät (100) nach Anspruch 9, wobei die Infrarot-Strahlungsquelle (113) ausgebildet ist, Strahlung mit einer Wellenlänge zwischen 700 nm und 10 um, vorzugsweise zwischen 700 nm und 5 um, oder höchst vorzugsweise zwischen 700 nm und 3 um zu emittieren.

11. Verfahren zum Beleuchten eines Dentalobjekts (101), mit den Schritten:
- Aufnehmen (S101) des Dentalobjekts (101) in einer Kammer (103); und
- Emittieren (S102) von Strahlung mit einer Wellenlänge, die kleiner als 350 nm ist, in die Kammer (103), wobei die Strahlungsquelle (105) während dem Emittieren von Strahlung bewegt wird.

12. Verfahren nach Anspruch 11, wobei das Dentalobjekt (101) während dem Emittieren von Strahlung bewegt wird.

13. Verfahren nach einem der Ansprüche 11 oder 12, wobei Strahlung mit einer Wellenlänge, die größer als 700 nm ist, mittels einer Infrarot-Strahlungsquelle (113) in die Kammer (103) emittiert wird.

14. Verfahren nach einem der Ansprüche 13, wobei die Infrarot-Strahlungsquelle (113) während dem Emittieren von Strahlung bewegt wird.

## Claims

1. An exposure apparatus (100) for exposing a dental object (101), comprising:
- a chamber (103) for receiving the dental object (101) ;
- a radiation source (105) for emitting radiation having a wavelength smaller than 350 nm into the chamber (103); and
- a movement device which is configured to move the radiation source (105) in a height and/or to rotate it around the dental object (101).

2. The exposure apparatus (100) according to claim 1, wherein the radiation source (105) is configured to emit radiation having a wavelength between 350 nm and 5 pm, preferably between 350 nm and 10 nm, or most preferably between 350 nm and 100 nm.

3. The exposure apparatus (100) according to any of the preceding claims, wherein the exposure apparatus (100) comprises an intensity adjustment device (107) for adjusting a radiation intensity of the radiation source (105) .

4. The exposure apparatus (100) according to any of the preceding claims, wherein the exposure apparatus (100) comprises a timer device (109) for activating the radiation source (105) for a predetermined period of time.

5. The exposure apparatus (100) according to any of the preceding claims, wherein the exposure apparatus (100) comprises a single radiation source (105) for emitting radiation having a wavelength smaller than 350 nm.

6. The exposure apparatus (100) according to any of the preceding claims, wherein the exposure apparatus (100) comprises a movement device (111) for moving the dental object (101) in front of the radiation source (105).

7. The exposure apparatus (100) according to claim 6, wherein the movement device (111) is configured to move the dental object (101) in a height and/or to rotate it with respect to the radiation source (105).

8. The exposure apparatus (100) according to any of the preceding claims, wherein the exposure apparatus (100) is configured to move the radiation source (105) in a height.

9. The exposure apparatus (100) according to any of the preceding claims, wherein the exposure apparatus (100) comprises an infrared radiation source (113) for emitting radiation having a wavelength that is greater than 700 nm in the chamber (103).

10. The exposure apparatus (100) according to claim 9, wherein the infrared radiation source (113) is configured to emit radiation having a wavelength between 700 nm and 10 µm, preferably between 700 nm and 5 µm, or most preferably between 700 nm and 3 µm.

11. A method of exposing a dental object (101), comprising the steps of:
- receiving (S101) the dental object (101) in a chamber (103); and
- emitting (S102) radiation having a wavelength smaller than 350 nm into the chamber (103), wherein the radiation source (105) is moved while radiation is emitted.

12. The method according to claim 11, wherein the dental object (101) is moved while radiation is emitted.

13. The method according to any of claims 11 or 12, wherein radiation having a wavelength greater than 700 nm is emitted into the chamber (103) by means of an infrared radiation source (113).

14. The method according to claim 13, wherein the infrared radiation source (113) is moved while emitting radiation.

## Revendications

1. Dispositif d'exposition (100) pour éclairer un objet dentaire (101), avec :
- une chambre (103) destinée à recevoir l'objet dentaire (101) ;
- une source de rayonnement (105) pour émettre un rayonnement d'une longueur d'onde inférieure à 350 nm dans la chambre (103) ; et
- un dispositif de déplacement conçu pour déplacer la source de rayonnement (105) à une hauteur et/ou pour la déplacer autour de l'objet dentaire (101).

2. Dispositif d'exposition (100) selon la revendication 1, où la source de rayonnement (105) est conçue pour émettre un rayonnement d'une longueur d'onde comprise entre 350 nm et 5 pm, de préférence entre 350 nm et 10 nm, ou de préférence entre 350 nm et 100 nm.

3. Dispositif d'exposition (100) selon l'une des revendications précédentes, où le dispositif d'exposition (100) comprend un dispositif de réglage de l'intensité (107) pour régler une intensité de rayonnement de la source de rayonnement (105).

4. Dispositif d'exposition (100) selon l'une des revendications précédentes, où le dispositif d'exposition (100) comprend un dispositif de temporisation (109) pour activer la source de rayonnement (105) pendant une durée donnée.

5. Dispositif d'exposition (100) selon l'une des revendications précédentes, où le dispositif d'exposition (100) comprend une source de rayonnement unique (105) pour émettre un rayonnement d'une longueur d'onde inférieure à 350 nm.

6. Dispositif d'exposition (100) selon l'une des revendications précédentes, où l'dispositif d'exposition (100) comprend un dispositif de déplacement (111) pour déplacer l'objet dentaire (101) devant la source de rayonnement (105).

7. Dispositif d'exposition (100) selon la revendication 6, où le dispositif de déplacement (111) est conçu pour déplacer l'objet dentaire (101) à une hauteur et/ou pour le faire pivoter par rapport à la source de rayonnement (105).

8. Dispositif d'exposition (100) selon l'une des revendications précédentes, où le dispositif d'exposition (100) est conçu pour déplacer la source de rayonnement (105) à une certaine hauteur.

9. Dispositif d'exposition (100) selon l'une des revendications précédentes, où le dispositif d'exposition (100) comprend une source de rayonnement infrarouge (113) pour émettre un rayonnement ayant une longueur d'onde dans la chambre (103) supérieure à 700 nm.

10. Dispositif d'exposition (100) selon la revendication 9, où la source de rayonnement infrarouge (113) est conçue pour émettre un rayonnement ayant une longueur d'onde comprise entre 700 nm et 10 pm, de préférence entre 700 nm et 5 pm, ou très préférentiellement entre 700 nm et 3 µm.

11. Procédé d'éclairage d'un objet dentaire (101), comprenant les étapes suivantes :
- réception (S101) de l'objet dentaire (101) dans une chambre (103) ; et
- émission (S102) d'un rayonnement d'une longueur d'onde inférieure à 350 nm dans la chambre (103), où la source de rayonnement (105) est déplacée pendant l'émission du rayonnement.

12. Procédé selon la revendication 11, où l'objet dentaire (101) est déplacé pendant l'émission d'un rayonnement.

13. Procédé selon l'une des revendications 11 ou 12, où un rayonnement d'une longueur d'onde supérieure à 700 nm est émis dans la chambre (103) au moyen d'une source de rayonnement infrarouge (113).

14. Procédé selon l'une des revendications 13, où la source de rayonnement infrarouge (113) est déplacée pendant l'émission de rayonnement.
